# EUROPÄISCHE PATENTSCHRIFT

(11) **EP 2 836 448 B1**
(45) Veröffentlichungstag und Bekanntmachung des Hinweises auf die Patenterteilung: **18.05.2016**
(21) Anmeldenummer: 13707552.9
(22) Anmeldetag: 02.03.2013
(51) Int. Cl.: B65G 49/04

(54) **ANLAGE ZUR TAUCHBEHANDLUNG VON GEGENSTÄNDEN**
SYSTEM FOR DIP TREATING OBJECTS
INSTALLATION DE TRAITEMENT D'OBJETS PAR IMMERSION

(30) Priorität: 14.04.2012 DE 102012007578
(43) Veröffentlichungstag der Anmeldung: 18.02.2015
(73) Patentinhaber: Eisenmann SE, 71032 Böblingen (DE)
(72) Erfinder: KATEFIDIS, Apostolos, 71116 Gärtringen (DE)
(74) Vertreter: Ostertag, Ulrich
(86) Internationale Anmeldenummer: PCT/EP2013/000611
(87) Internationale Veröffentlichungsnummer: WO 2013/152821

(56) Entgegenhaltungen:
- WO-A1-2009/083081
- DE-C1- 4 304 145

## Beschreibung

Die Erfindung betrifft eine Anlage zur Tauchbehandlung von Gegenständen, insbesondere von Fahrzeugkarosserien, mit
a) mindestens einem Tauchbecken, das bis zu einem bestimmten Spiegel mit einer Behandlungsflüssigkeit befüllbar ist;
b) einem Transportsystem, welches die Gegenstände an das Tauchbecken heran und von diesem wegbewegt;
c) mindestens einer stationären Drehstation, die an dem Tauchbecken vorgesehen ist und eine Drehplattform aufweist, auf welcher jeweils mindestens ein Gegenstand befestigbar ist und die von einer ersten Position, in welcher sich der Gegenstand oberhalb des Spiegels der Behandlungsflüssigkeit befindet, in eine zweite Position, in welcher sich der Gegenstand unterhalb des Spiegels der Behandlungsflüssigkeit befindet, und/oder in der Gegenrichtung zwischen diesen beiden Positionen verdrehbar ist;
wobei
d) jeder Gegenstand auf einem Skid der Anlage befestigbar ist, der mit dem Transportsystem zusammenwirkt und auf der Drehplattform der Drehstation festlegbar ist, wobei der Skid ein Grundgerüst und eine Befestigungseinrichtung für den Gegenstand aufweist.

Unter einer "stationären" Drehstation wird hier eine solche verstanden, die einem Tauchbecken zugeordnet ist und sich nicht zusammen mit dem zu behandelnden Gegenstand durch die gesamte Anlage bewegt. Sie kann jedoch im Einzelfalle entlang eines Tauchbeckens über eine gewisse Strecke hin und her bewegt werden.

Anlagen der oben genannten Art sind beispielsweise in der gattungsgemäßen DE 43 04 145 C1 oder der EP 0 749 395 B1 beschrieben. Dort sind die eingesetzten Skids im Wesentlichen in sich starre Gebilde, bei denen die aufgesetzte Fahrzeugkarosserie sich gegenüber dem Grundgerüst nicht bewegen kann. Die Plattformen der Drehstationen, auf welche die Skids mit den Fahrzeugkarosserien aufgesetzt werden, sind über verhältnismäßig lange Lenker mit der Drehachse der jeweiligen Drehstation verbunden. Dies ist notwendig, um die Fahrzeugkarosserien bei einer Drehung um 180° tatsächlich unter den Spiegel der Behandlungsflüssigkeit im Tauchbecken zu bringen, da sich die Drehachse selbst außerhalb der Behandlungsflüssigkeit befinden soll. Auf diese Weise ergibt sich eine verhältnismäßig große Höhe, auf der sich die Fahrzeugkarosserie innerhalb der Drehstation befindet, was sich in einem entsprechenden Höhenniveau der heran- und abführenden Transportsysteme niederschlägt. Eine solche Höhe ist jedoch insbesondere in vor- und nachgeschalteten Anlagenteilen nicht erwünscht, durch welche die Fahrzeugkarosserien auf denselben Skids geführt werden sollen.

Aufgabe der vorliegenden Erfindung ist es, eine Anlage der eingangs genannten Art derart auszugestalten, dass die Höhenposition der nicht eingetauchten Gegenstände auf der Drehstation möglichst niedrig ist.

Diese Aufgabe wird erfindungsgemäß dadurch gelöst, dass
e) die Befestigungseinrichtung aufweist:
   ea) eine Haltestruktur für den Gegenstand;
   eb) mindestens zwei Führungsglieder, die an dem Grundgerüst des Skids befestgt sind und sich von diesem weg in Richtung auf die Haltestruktur erstrecken oder an der Haltestruktur befestigt sind und sich von dieser weg in Richtung auf das Grundgerüst erstrecken und jeweils ein Langloch aufweisen;
   ec) mindestens zwei Führungszapfen, die an der Haltestruktur oder dem Grundgerüst befestigt sind und jeweils in ein Langloch eines Führungsgliedes verschiebbar eingreifen.

Erfindungsgemäß wird also das Konzept herkömmlicher Skids aufgegeben, die Fahrzeugkarosserie völlig starr und unbeweglich an dem Grundgerüst des Skids zu befestigen. Stattdessen wird dem Gegenstand die Freiheit gegeben, sich in ganz definierter Weise gegenüber dem Grundgerüst des Skids unter dem Einfluss der Schwerkraft, gegebenenfalls auch unter dem Einfluss eines aktiven Antriebs, bei der Drehbewegung in der Drehstation zu bewegen. Die Schwerkraft bzw. die Antriebseinrichtung sorgt dafür, dass der Gegenstand in der ausgetauchten Position, in der er sich oberhalb der Drehachse befindet, so nah wie möglich an das Grundgerüst des Skids heranrückt. Bei der Verdrehung der Drehplattform gewinnt jedoch der der Befestigungseinrichtung eingeräumte Freiheitsgrad an Bedeutung und lässt es zu, dass die Schwerkraft den Gegenstand von dem Grundgerüst wegzieht. Nach einer Drehung um 180°, nach welcher der Gegenstand gewissermaßen "auf dem Rücken" liegt, besitzt dieser dann den maximalen Abstand vom Grundgerüst und damit auch von der Drehachse.

Dies wird durch die erfindungsgemäße Ausgestaltung der die Haltestruktur mit dem Skid verbindenden Führungsglieder und Führungszapfen erreicht. In der "Normalposition" des Gegenstandes, in der dieser also nicht eingetaucht ist, befinden sich die Führungszapfen aufgrund der Schwerkraft in Anlage an einem Ende der Langlöcher. Auf diese Weise ergibt sich eine stabile Ruheposition des Gegenstandes, da eine Verschwenkung des Gegenstandes entgegen der Richtung, in der die Schwerkraft wirkt, nur unter Kraftaufwand möglich ist.

Um die Höhe der.Haltestruktur in der ausgetauchten Position über dem Grundgerüst des Skids klein zu halten, sollten die unteren Enden der Langlöcher so nah wie möglich am Grundgerüst des Skids liegen.

In der eingetauchten Position liegen die Führungszapfen an den entgegengesetzten Enden der Langlöcher an, so dass die Haltestruktur mit dem Gegenstand an zwei Stellen aufgehängt ist. Dies ergibt eine sehr stabile Lage des Gegenstandes in der eingetauchten Position.

Bei einer besonders bevorzugten Ausführungsform der Erfindung weist die Befestigungseinrichtung eine Dämpfungseinrichtung auf, welche die unter dem Einfluss der Schwerkraft stattfindende Bewegung des Gegenstandes gegenüber dem Grundgerüst des Skids bremst. Auf diese Weise lässt sich die Geschwindigkeit, mit welcher sich der Gegenstand gegenüber dem Grundgerüst unter dem Einfluss der Schwerkraft bewegt, auf das gewünschte Maß begrenzen.

Ein Ausführungsbeispiel der Erfindung wird nachfolgend anhand der Zeichnung näher erläutert; es zeigen
- Figur 1: in der Seitenansicht einen Ausschnitt aus einer Anlage zur kataphoretischen Tauchlackierung von Fahrzeugkarosserien;
- Figur 2: in der Seitenansicht und in größerem Maßstab eine Fahrzeugkarosserie, befestigt auf einem Skid, wie dieser bei der Anlage der Figur 1 eingesetzt wird, und zwar in einer ersten, ausgetauchten Drehposition;
- Figur 3: eine Seitenansicht, ähnlich der Figur 2, in der sich jedoch die Fahrzeugkarosserie mit dem Skid in einer Tauchposition befindet.

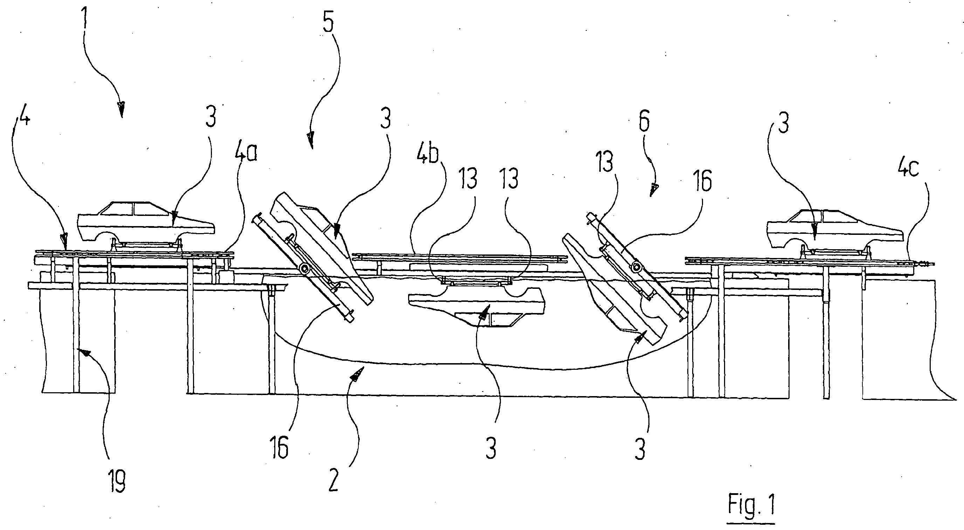

Die in Figur 1 ausschnittsweise dargestellte und insgesamt mit dem Bezugszeichen 1 gekennzeichnete Anlage zur kataphoretischen Tauchlackierung von Fahrzeugkarosserien ist als Beispiel für eine Anlage zur Tauchbehandlung von Fahrzeugkarosserien zu verstehen. Sie weist als Hauptbestandteil ein Tauchbecken 2 auf, das im betriebsbereiten Zustand bis zu einer bestimmten Höhe mit Lack angefüllt ist. Die zu lackierenden Fahrzeugkarosserien 3 werden mit Hilfe eines Transportsystemes 4 in Figur 1 von links nach rechts durch die Anlage 1 hindurchgeführt. Es ist durch zwei stationäre Drehstationen 5, 6 unterbrochen, so dass es also einen Einlaufabschnitt 4a, einen Zwischenabschnitt 4b und einen Auslaufabschnitt 4c des Transportsystems 4 im Bereich des Tauchbeckens 2 gibt.

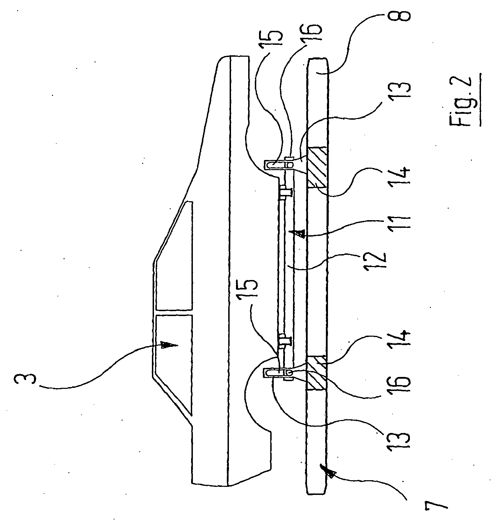

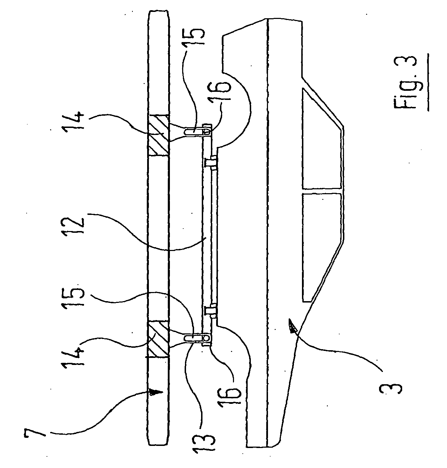

Die Fahrzeugkarosserien 3 werden durch die gesamte Anlage auf dem Transportsystem 4 mit Hilfe von Halterungsgestellen 7, sogenannten "Skids" geführt, wie sie schematisch in den Figuren 2 und 3 dargestellt sind. Skids als solche sind zum Transport von Fahrzeugkarosserien bekannt. Sie zeichnen sich generell dadurch aus, dass sie zwei an einem Grundgerüst 14 befestigte parallele Kufen 8 aufweisen, von denen in den Figuren 2 und 3 nur die dem Betrachter abgewandte Kufe 8 sichtbar ist; die zweite hierzu parallele Kufe 8 ist aus Darstellungsgründen abgenommen. Die Kufen 8 wirken in außerhalb der hier beschriebenen Anlage 1 befindlichen Bereichen der Automobilfertigung mit einem bekannten Fördersystem, häufig mit Rollenfördersystemen, zusammen. Damit der hier beschriebene Skid 7 auch in diesen anderen Bereichen eingesetzt werden kann, besitzt er ebenfalls solche Kufen 8.

Während an bekannten Skids 7 die Fahrzeugkarosserien 3 starr befestigt sind, sich also insbesondere gegenüber den Kufen 8 und dem diese verbindenen Grundgerüst nicht bewegen können, besitzt der hier dargestellte Skid 7 eine Befestigungseinrichtung 11, welche sich gegenüber dem die Kufen 8 tragenden Grundgerüst bewegen kann. Die Befestigungseinrichtung 11 umfasst einen rechteckigen Rahmen 12, der eine Haltestruktur bildet, auf welcher die Fahrzeugkarosserie 3 in bekannter Weise mit üblichen Befestigungsmitteln befestigt werden kann.

Der Rahmen 12 ist über vier Führungsglieder 13 mit dem Grundgerüst 14 des Skids 7 verbunden. Zwei dieser Führungsglieder 13 sind am in Bewegungsrichtung nachlaufenden Endbereich des Grundgerüsts 14 befestigt; zwei weitere dieser Führungsglieder 13 sind in ähnlicher Weise an dem in Bewegungsrichtung vorauseilenden Endbereich des Grundgerüsts 14 befestigt. In jedem Führungsglied 13 ist ein Langloch 15 ausgebildet.

In den Figuren 2 und 3 ist jeweils nur das dem Betrachter abgewandte Führungsglied 13 jeden Paares dargestellt; das jeweils zweite Führungsglied 13 der Paare ist erneut aus Gründen der Darstellung abgenommen.

An dem Rahmen 12 sind insgesamt vier Führungszapfen 16 befestigt, die jeweils in ein Langloch 15 eines Führungsgliedes 13 eingreifen und in diesem verschiebbar geführt sind.

Der genaue Aufbau der beiden Drehstationen 5, 6 ist im vorliegenden Zusammenhang von untergeordneter Bedeutung. Es genügt zu wissen, dass sie eine Drehplattform 16 besitzen, die mit geeigneten Führungen für die Skids 7 versehen sind. Beispielsweise können an den Außenseiten der Kufen 8 der Skids Führungsrollen angeordnet sein, die in Führungsschienen der Drehplattform 16 verfahren werden können.

Die beiden Drehplattformen 16 können mit Hilfe von Getriebemotoren (nicht dargestellt) in Drehung versetzt werden.

Die Abschnitte 4a, 4b und 4c des Transportsystemes 4 sind als herkömmliche Rollenbahnförderer ausgebildet. Die Bewegung der Fahrzeugkarosserien 3 auf die Drehplattformen 16 bzw. von diesen weg wird mit Hilfe eines hier nicht im Einzelnen dargestellten Schiebemechanismus bewirkt, der mit Ketten-angetriebenen Mitnehmern an den Skids 7 angreift.

Die Funktionsweise der oben beschriebenen Anlage 1 ist wie folgt:

Die zu lackierenden Fahrzeugkarosserien 3 werden mit Hilfe des Einlaufabschnittes 4a des Transportsystems 4 in Figur 1 von links kommend zugefördert. Sie sind dabei auf der Befestigungseinrichtung 11, genauer auf dem Rahmen 12, montiert. In der in Figur 2 dargestellten Position befinden sich die Führungszapfen 16 an dem Ende des entsprechenden Langloches 15, welches dem Grundgerüst 14 benachbart ist. Die Fahrzeugkarosserie 3 hat hier ersichtlich eine stabile Lage.

In der ausgetauchten Position der Figur 2 besitzt die Fahrzeugkarosserie 3 einen verhältnismäßig kleinen Abstand von dem Skid 7, so dass die Fahrzeugkarosserien 3 in geringer Höhe über dem Transportsystem 4 befördert werden.

Wenn die Fahrzeugkarosserien 3 in den Bereich der ersten Drehstation 5 gelangen, übernimmt das oben erwähnte, jedoch nicht dargestellte, Schiebesystem den Weitertransport des die Fahrzeugkarosserie 3 tragenden Skids 7 und schiebt diesen auf die Drehplattform 16 dieser Drehstation 5. Dabei werden die Kufen 8 des Skids 7 in der oben schon angedeuteten Weise an der Drehplattform 16 geführt. Der aufgeschobene Skid 7 wird in geeigneter Weise an der Drehplattform 16 verriegelt.

Nunmehr werden die Getriebemotoren bestromt, so dass sich die Drehplattform 16 der Drehstation 5 zu drehen beginnt und zwar im Uhrzeigersinn. Sie durchläuft dabei einen Winkel von 180°. Dabei gleiten die Führungszapfen 16 in den entsprechenden Langlöchern 15 der Schenkel der Führungsglieder 13. Nach Drehung der Drehplattform 16 und damit der Fahrzeugkarosserie 3 um 180° wird die in Figur 3 dargestellte Position erreicht, in welcher die Führungszapfen 16 sich an dem vom Grundgerüst 14 entfernten Ende der Langlöcher 15 befinden. Erneut hat die Fahrzeugkarosserie 3 eine stabile Position erreicht.

In der Figur 3 dargestellten Position erreicht der Rahmen 12 der Befestigungseinrichtung 11 mit der daran befestigten Fahrzeugkarosserie 3 den maximalen Abstand von dem Grundgerüst 14 des Skids 7. Vergleicht man die Figur 2, in welcher der Drehwinkel 0° ist, mit der Figur 3, in welcher der Drehwinkel 180° ist, so erkennt man, dass die nicht eingetauchte Fahrzeugkarosserie 3 (0°) einen sehr viel geringeren Abstand in vertikaler Richtung von dem Skid 7 und damit auch von der Drehplattform 16 aufweist, als in voll eingetauchtem Zustand (180°).

In der eingetauchten Position (Drehwinkel 180°) kann die Fahrzeugkarosserie 3 je nach Wunsch eine gewisse Zeit verharren. Früher oder später wird sie und der sie tragende Skid 7 mit Hilfe eines ähnlichen Schiebemechanismus in hängender Position auf den Zwischenabschnitt 4b des Transportsystems 4 geschoben. Dort wird sie nun in konventioneller Weise weiterbewegt, wobei sie sich durch den im Tauchbecken 2 befindlichen Lack bewegt.

Hat die Fahrzeugkarosserie 3 in dieser hängenden Position den Zwischenabschnitt 4b des Transportsystems 4 durchquert, wird sie erneut mit Hilfe eines Schiebemechanismus auf die Drehplattform 16 der zweiten Drehstation 6 geschoben. Deren Drehplattform 16 wird nunmehr mit Hilfe der zugehörigen Getriebemotoren in Drehung versetzt und zwar vorzugsweise gleichsinnig zur Drehung in der ersten Drehstation 5, also im Uhrzeigersinn. Grundsätzlich wäre es aber auch denkbar, die Drehbewegung beim Austauchen der Fahrzeugkarosserie 3 in der entgegengesetzten Drehrichtung vorzunehmen wie das Eintauchen.

Hat dann die Fahrzeugkarosserie 3 wieder ihre ausgetauchte, im Wesentlichen horizontale Lage auf der Drehplattform 16 der zweiten Drehstation 6 erreicht, so kann sie mit Hilfe eines weiteren, nicht dargestellten Schiebemechanismus auf den Auslaufabschnitt 4c des Transportsystems 4 geschoben und dort in herkömmlicher Weise transportiert werdem.

Dem beschriebenen Ausschnitt einer Tauchlackieranlage 1 können verschiedene andere Bearbeitungsstationen vor-und nachgeschaltet sein, die ebenfalls mit bestimmten Behandlungsflüssigkeiten gefüllte Tauchbecken aufweisen und durch welche die Fahrzeugkarosserien 3 in derselben Weise geführt werden, wie dies oben für das kataphoretische Tauchbad beschrieben wurde.

## Patentansprüche

1. Anlage (1) zur Tauchbehandlung von Gegenständen (3), insbesondere von Fahrzeugkarosserien, mit
a) mindestens einem Tauchbecken (2), das bis zu einem bestimmten Spiegel mit einer Behandlungsflüssigkeit befüllbar ist;
b) einem Transportsystem (4), welches die Gegenstände an das Tauchbecken (2) heran und von diesem wegbewegt;
c) mindestens einer stationären Drehstation (56), die an dem Tauchbecken (2) vorgesehen ist und eine Drehplattform (16) aufweist, auf welcher jeweils mindestens ein Gegenstand (3) befestigbar ist und die von einer ersten Position, in welcher sich der Gegenstand (3) oberhalb des Spiegels der Behandlungsflüssigkeit befindet, in eine zweite Position, in welcher sich der Gegenstand unterhalb des Spiegels der Behandlungsflüssigkeit befindet, und/oder in der Gegenrichtung zwischen diesen beiden Positionen verdrehbar ist;
wobei
d) jeder Gegenstand auf einen Skid (7) der Anlage befestigbar ist, der mit dem Transportsystem (4) zusammenwirkt und auf der Drehplattform (16) der Drehstation (56) festlegbar ist, wobei der Skid (7) ein Grundgerüst (14) und eine Befestigungseinrichtung (11) für den Gegenstand aufweist;
**dadurch gekennzeichnet, dass**
e) die Befestigungseinrichtung (11) aufweist:
ea) eine Haltestruktur (12) für den Gegenstand (3);
eb) mindestens zwei Führungsglieder (13), die an dem Grundgerüst (14) des Skids (7) befestigt sind und sich von diesem weg in Richtung auf die Haltestruktur (12) erstrecken öder an der Haltestruktur (12) befestigt sind und sich vor dieser weg in Richtung auf das Grundgerüst (14) erstrecken und jeweils ein Langloch (15) aufweisen;
ec) mindestens zwei Führungszapfen (16), die an der Haltestruktur (12) oder dem Grundgerüst (14) befestigt sind und jeweils in ein Langloch (15) eines Führungsgliedes (13) verschiebbar eingreifen.

2. Anlage nach Anspruch 1, **dadurch gekennzeichnet,**
**dass** die Befestigungseinrichtung (11) eine Dämpfungseinrichtung aufweist, welche die unter dem Einfluss der Schwerkraft stattfindende Bewegung des Gegenstandes (3) gegenüber dem Skid (7) bremst.

## Claims

1. An installation (1) for immersion treating objects (3), in particular vehicle bodies, having
a) at least one immersion tank (2), which can be filled to a certain level with a treatment fluid;
b) a transport system (4), which moves the objects towards the immersion tank (2) and away from this;
c) at least one stationary rotary station (5, 6), which is provided on the immersion tank (2) and has a rotary platform (16) on which at least one object (2) can be fastened in each case and which can be rotated from a first position, in which the object (2) is located above the level of the treatment fluid, into a second position, in which the object is located below the level of the treatment fluid, and/or in the opposite direction between these two positions;
wherein
d) each object can be fastened to a skid (7) of the installation, which cooperates with the transport system (4) and can be fixed on the rotary platform (16) of the rotary station (5, 6), wherein the skid (7) has a base structure (14) and a fastening device (11) for the object;
**characterised in that**
e) the fastening device (11) has
ea) a holding structure (12) for the object (3) ;
eb) at least two guide elements (13), which are fastened to the base structure (14) of the skid (7) and extend away from this in the direction of the holding structure (12) or are fastened to the holding structure (12) and extend away from this in the direction of the base structure (14) and each have a slot (15);
ec) at least two guide pins (16), which are fastened to the holding structure (12) or the base structure (14) and each engage in displaceable manner in a slot (15) of a guide element (13).

2. An installation according to Claim 1, **characterised in that** the fastening device (11) has a damping device which brakes the gravity-induced movement of the object (3) with respect to the skid (7).

## Revendications

1. Installation (1) de traitement par immersion d'objets (3), en particulier de carrosseries de véhicules, comprenant
a) au moins un bassin d'immersion (2) qui peut être rempli d'un liquide de traitement jusqu'à un niveau déterminé ;
b) un système de transport (4) qui approche les objets du bassin d'immersion (2) et les en éloigne ;
c) au moins un poste rotatif stationnaire (56), qui est prévu sur le bassin d'immersion (2) et qui présente une plateforme rotative (16), sur chacun desquels au moins un objet (3) peut être fixé et qui peut être tourné d'une première position, dans laquelle l'objet (3) se trouve au-dessus du niveau du liquide de traitement, dans une deuxième position, dans laquelle l'objet se trouve au-dessous du niveau du liquide de traitement, et/ou en sens inverse entre ces deux positions ;
dans laquelle
d) chaque objet peut être fixé sur un plateau (7) de l'installation, qui coopère avec le système de transport (4) et qui peut être fixé sur la plateforme rotative (16) du poste rotatif (56), le plateau (7) présentant un cadre de base (14) et un dispositif de fixation (11) pour l'objet ;
**caractérisée en ce que**
e) le dispositif de fixation (11) présente :
ea) une structure de maintien (12) pour l'objet (3) ;
eb) au moins deux éléments de guidage (13) qui sont fixés au cadre de base (14) du plateau (7) et qui s'étendent en s'éloignant de celui-ci dans la direction de la structure de maintien (12) ou sont fixés à la structure de maintien (12) et s'étendent en s'éloignant de celle-ci dans la direction du cadre de base (14) et présentent chacun un trou oblong (15) ;
ec) au moins deux tenons de guidage (16) qui sont fixés à la structure de maintien (12) ou au cadre de base (14) et s'engagent chacun de manière coulissante dans un trou oblong (15) d'un élément de guidage (13).

2. Installation selon la revendication 1, **caractérisé en ce que** le dispositif de fixation (11) présente un dispositif d'amortissement qui freine le mouvement de l'objet (3) par rapport au plateau (7) qui se produit sous l'effet de la force de gravité.
